# EUROPÄISCHE PATENTSCHRIFT

(11) **EP 0 532 866 B1**
(45) Veröffentlichungstag und Bekanntmachung des Hinweises auf die Patenterteilung: **14.12.1994**
(21) Anmeldenummer: 92112899.7
(22) Anmeldetag: 29.07.1992
(51) Int. Cl.: B61D 27/00, B61D 3/18, B60H 1/24

(54) **Schienengebundener, geschlossener, doppelstöckiger Transportwagen mit Unterstock und Oberstock zum Transport von Landfahrzeugen, insbesondere Kraftfahrzeugen mit Verbrennungsmotor**
Trackbound closed doubledecked transport wagon with lower deck and upper deck for transport of road vehicles, especially motor vehicles with internal combustion engine
Wagon de transport à étage, roulant sur rails fermé avec étage bas et étage supérieur pour le transport des véhicules routiers, notamment des véhicules automobiles avec moteur à combustion interne

(30) Priorität: 20.09.1991 DE 4131271
(43) Veröffentlichungstag der Anmeldung: 24.03.1993
(73) Patentinhaber: Linke-Hofmann-Busch Waggon-Fahrzeug- Maschinen GmbH, D-38239 Salzgitter (DE)
(72) Erfinder: Sabath, Johannes, W-3320 Salzgitter 51 (DE)

(56) Entgegenhaltungen:
- EP-A- 0 438 701

## Beschreibung

Die Erfindung betrifft einen schienengebundenen, geschlossenen, doppelstöckigen Transportwagen mit Unterstock und Oberstock zum Transport von Landfahrzeugen, insbesondere Kraftfahrzeugen mit Verbrennungsmotor nach dem Oberbegriff des Anspruchs 1.

Aus der DE-AS 12 18 491 ist ein gedeckter, zweistöckiger Eisenbahnwagen für den Transport von Kraftfahrzeugen bekannt, dessen Oberstock seitlich und oben von einem gewölbten Aufbau umschlossen ist, der um eine seiner beiden Längskanten aus seiner Normalstellung hochschwenkbar und in einer Stellung, in der er um einen 90° wesentlich unterschreitenden Schwenkwinkel ausgeschwenkt ist, feststellbar. Durch diese Ausbildung wird dem Mangel abgeholfen, daß bei derartigen Doppelstockwagen ohne verstellfähigem Dach im Oberstock seitlich der geladenen Kraftfahrzeuge nur wenig Raum zur Verfügung steht, und die Insassen, wenn sie nach dem Laden aussteigen und vor dem Entladen wieder einsteigen wollen, sich nur innerhalb eines engen Raumes und in gebückter Haltung bewegen können.

Aus der EP-0 345 497 A2 ist ein weiterer Doppelstockwagen zum Transport von Kraftfahrzeugen bekannt, dessen Dachschale zur Anpassung an das übliche Durchfahrprofil der Schienenstrecke von der Längsmitte zu den Seitenwänden hin im Polygonzug geneigt ausgebildet ist. Die Problematik des unzureichenden Raumes im Oberstock seitlich der geladenen Fahrzeuge für die Fahrzeuginsassen beim Be- und Entsteigen der Fahrzeuge wird nicht angesprochen bzw. gelöst.

Auf die Problematik der Abfuhr der Verbrennungsgase der Kraftfahrzeuge während des Lade- und Entladevorgangs bei weitgehend geschlossenen Transportwagen, insbesondere aus dem Unterstock des Transportwagens wird im vorstehend abgehandelten Stand der Technik nicht eingegangen.

Aus der EP 0 251 200 A1 ist eine Heiz- und Lüftungsvorrichtung für ein gattungsfremdes Schienenfahrzeug bekannt, das ein zweistöckiges Mittelteil und zwei einstöckige Endteile aufweist Die Heiz- und Lüftungsvorrichtung weist im oberen Teil Jedes Endabteils eine Lüftungseinheit auf, die einen Quer-Verteilkanal speist, der mit Kanälen, die in das Endabteil blasen und mit mindestens zwei weiteren Längskanälen verbunden ist, die in das Mittelabteil blasen, wobei vier Längskanäle dem Boden des zweiten Stockwerks benachbart liegen. Die vier in das Mittelabteil blasenden Längskanäle befinden sich in zwei Kästen mit Dreiecksquerschnitt, die Bestandteil der Struktur des Bodens sind. Die Ausbildung und die Arbeitsweise (Blasbetrieb) des Heiz- und Lüftungssystems und schließlich der Ausbildung und Anordnung des Kanalsystems und der Luftführung ist zur Verwendung als Lüftungseinrichtung für doppelstöckige Transportwagen zum Transport von Landfahrzeugen ungeeignet. Obgleich einige Elemente des Kanalsystems, z. B. das Verwenden von sich in Fahrzeuglängsrichtung erstreckende Längskanälen und das Versehen von Längskanälen mit senkrechten Stichkanälen sich allgemein für die Ausbildung von Lüftungseinrichtungen eignen, fehlt es doch an einer konkreten, übertragbaren Lehre zur Ausbildung einer geeigneten Lüftungseinrichtung für schienengebundene, doppelstöckige Transportwagen für Landfahrzeuge.

Der Erfindung liegt daher die Aufgabe zugrunde, bei einem gattungsgemäßen Transportwagen die Problematik der Abfuhr von insbesondere aus dem Betrieb von Verbrennungskraftmaschinen herrührenden Schadstoffen, die sich während des Lade- und Entladevorgangs bei einem weitgehend geschlossenen Transportwagen in seinem Laderaum ansammeln und zu gesundheitsrelevanten Konzentrationen an Schadstoffen führen können, zu lösen.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Durch die Ausbildung und Anordnung der Erfindung wird eine wirksame Belüftung des mit Schadstoffen belasteten Transportwagens sowohl im Oberstock als auch im Unterstock bewirkt, wobei die Zufuhr der Frischluft für beide Stöcke über im Dachabschnitt angeordnete verschließbare Frischluftansaugöffnungen erfolgt, wo die Frischluft im allgemeinen am saubersten ist. Die mit Schadstoffen belastete Raumluft wird in beiden Stöcken im Bereich des Bodens und damit im Bereich, wo üblicherweise die Auspuffanlagen von Kraftfahrzeugen mit Verbrennungskraftmaschinen enden, möglichst nahe am Entstehungsort der Schadstoffe abgesaugt. Um einen effektiveren Luftaustausch zu erhalten, wird ein saugendes Lüftungssystem verwendet, und die mit Schadstoffen belastete Raumluft (Fortluft) wird am tiefsten Punkt des Transportwagens nach außen abgegeben, womit sichergestellt ist, daß Kurzschlüsse zwischen einströmender Außenluft (Frischluft) und austretender Fortluft weitgehend vermieden werden.

Durch die Verwendung einer Wechseleinrichtung nach Anspruch 2 ist ein ausgesuchter Stock belüftbar und es kann ein von Kraftfahrzeugen befahrener Stock allein belüftet werden. Da die Lüftungseinrichtung nur bei Bedarf und für einen ausgesuchten Stock betrieben werden kann, ist die Lüftungseinrichtung mit geringerem Luftdurchsatz betreibbar, wodurch erhebliche Energieeinsparungen beim Betrieb des Luftdurchsatzgerätes möglich sind.

Durch die Verwendung von separaten Luftkanalsystemen gemäß Anspruch 3 für jeden Stock ist eine zweckmäßige Lösung für die Ausgestaltung eines Luftkanalsystems für eine wechselweise schalt- und betreibbare Lüftungseinrichtung angegeben.

Durch die Merkmale des Anspruchs 4 ist die Lüftungseinrichtung in Verbindung mit den Merkmalen nach Anspruch 3 in zweckmäßiger Weise mit einem Luftdurchsatzgerät betreibbar, wobei die Fortluft in einem beiden Luftkanalsystemen gemeinsamen Vorraum des Luftdurchsatzgerätes gesammelt wird.

Durch die Merkmale des Anspruchs 5 ist eine einfache, platzsparende Ausgestaltung einer Umstelleinrichtung realisiert, die die örtliche Nähe der beiden Luftkanalsysteme für Ober- und Unterstock im Vorraum des Luftdurchsatzgerätes nutzt.

Durch die Ausgestaltung des Luftkanalsystems des Oberstocks gemäß Anspruch 6 sind die Luftkanäle so angeordnet, daß die freizügige Be- und Entladung möglichst wenig behindert wird und eine fertigungsgerechte Plazierung im Transportwagen gegeben ist.

Durch die in Anspruch 7 angegebene Weiterbildung der Ausgestaltung nach Anspruch 5 ist eine günstige Anordnung der Längskanäle im Hinblick auf einen Anschluß an ein an beliebiger Stelle im Untergestellbereich angeordnetes Luftdurchsatzgerät gegeben.

Durch die Ausgestaltung des Luftkanalsystems des Unterstocks nach Anspruch 8 ist für den unteren Teil des Luftkanalsystems lediglich ein Luftkanal erforderlich, der derart angeordnet ist, daß eine freizügige Be- und Entladung möglichst wenig behindert wird. Weiter ist eine fertigungstechnisch günstige Plazierung im Transportwagen und ein kurzer Weg zum Luftdurchsatzgerät gegeben. Der obere Teil des Luftführungssystems für den Unterstock ist ab der Öffnung der Entluftansaugkanäle im Oberstock mit dem oberen Teil des Luftführungssystems des Oberstocks ab Fortluftansaugöffnungen bis zur Frischluftansaugöffnung identisch und damit wirtschaftlicher als zwei auch bautecbnisch grundsätzlich getrennte Luftführungssysteme.

Durch die im Anspruch 9 angegebene Ausgestaltung der Erfindung, wird eine weitere Lösung für die Ausbildung des notwendigen Luftkanalsystems aufgezeigt, die getrennte Luftkanalsysteme zur Fortluftabsaugung vermeidet, damit fertigungstechnisch wirtschaftlicher ist und Stauraumvorteile bietet. Es kann das Luftkanalsystem für den Oberstock, insbesondere die Längs- und Stichkanäle aus dem ersten Ausführungsbeispiel verwendet werden und der Bodenlängskanal kann entfallen. Durch den Entfall des Bodenlängskanals wird im Mittelbereich des Unterstocks ein größerer absatzfreier Bodenbereich geschaffen.

Durch die im Anspruch 10 angegebene Weiterbildung wird eine Lösung für eine günstige Plazierung der Umstelleinrichtung, insbesondere bei einer Ausgestaltung des Luftkanalsystems nach Anspruch 9, aufgezeigt. Durch die Verlängerung der Umstelleinrichtung aus dem Untergestellbereich wird der knappe, freie Einbauraum im Untergestellbereich entlastet.

Durch die im Anspruch 11 angegebene Weiterbildung der Lösung gemäß Anspruch 10 ist es entbehrlich, für die Fortluftansaugöffnungen des Oberstocks eigene Schwenkklappen vorzusehen.

Durch die im Anspruch 12 angegebene Ausgestaltung der Frischluftansaugöffnung wird das Problem der eingeschränkten Begehbarkeit des Oberstocks im Seitenbereich, wo sich die Insassen der verladenen Kraftfahrzeuge zum Be- und Entsteigen der Kraftfahrzeuge aufhalten, zweckmäßig und wirtschaftlich gelöst.

Durch die im Anspruch 13 angegebene Weiterbildung der Frischluftansaugöffnung wird eine besonders zweckmäßige und wirtschaftliche Lösung zum Öffnen und Schließen der Frischluftansaugöffnung angegeben, die in Weiterbildung gemäß Anspruch 14 gleichzeitig als Wetterschutz nutzbar ist.

Die Erfindung wird nachstehend anhand von in der Zeichnung dargestellten Ausführungsbeispielen näher erläutert.

Es zeigt
- Fig. 1: eine schematische Darstellung einer ersten Ausführungsform eines doppelstöckigen Transportwagens mit Lüftungseinrichtung und Darstellung der Luftführung zur Lüftung des Unterstocks in perspektivischer Ansicht.;
- Fig. 2: den Wagenkasten der ersten Ausführungsform der Erfindung im Querschnitt im Bereich einer Einluftöffnung mit Darstellung der Luftführung zur Lüftung des Unterstocks in Darstellung einer Querschnittshälfte;
- Fig. 3: eine schematische Darstellung der ersten Ausführungsform der Erfindung mit Lüftungseinrichtung und Darstellung der Luftführung zur Lüftung des Oberstocks in perspektivischer Darstellung;
- Fig. 4: den Wagenkasten der ersten Ausführungsform der Erfindung im Querschnitt im Bereich eines Stichkanals des Luftkanalsystems mit Darstellung der Luftführung zur Luftführung zur Lüftung des Oberstocks in Darstellung einer Querschnittshälfte;
- Fig. 5: den unteren Bereich des Wagenkastens gemaß Fig. 1 und 2 mit Luftdurchsatzgerät im Untergestellbereich im Querschnitt mit Darstellung der Luftführung und Lage des Klappensystems;
- Fig. 6: den unteren Bereich des Wagenkastens gemäß Fig. 3 und 4 mit Luftdurchsatzgerät im Untergestellbereich im Querschnitt mit Darstellung der Luftführung und Lage des Klappensystems;
- Fig. 7: den Wagenkasten einer zweiten Ausführungsform der Erfindung im versetzten Querschnitt, wobei die rechte Querschnittshälfte einen Schnitt im Bereich einer Einluftöffnung und die linke Querschnittshälfte einen Schnitt im Bereich eines Stichkanals des Luftkanalsystems zur Fortluftabsaugung und Darstellung der Luftführung zur Lüftung des Unterstocks;
- Fig. 8: den Wagenkasten nach der zweiten Ausführungsform der Erfindung im Querschnitt im Bereich eines Stichkanals des Luftkanalsystems zur Fortluftabsaugung und Darstellung der Luftführung zur Lüftung des Oberstocks;
- Fig. 9: den unteren Bereich des Wagenkastens im Querschnitt nach der zweiten Ausführungsform der Erfindung gemäß Fig. 7 und 8 mit Luftdurchsatzgerät und Darstellung der Luftführung.

Der Transportwagen ist als geschlossener, doppelstöckiger Transportwagen mit Unterstock 1 und Oberstock 2 zum Transport von Landfahrzeugen ausgebildet und mit einer Lüftungseinrichtung 3 versehen, die ein Luftführungssystem aufweist, das sowohl mit dem Unterstock 1 als auch mit dem Oberstock 2 in Verbindung steht. Mindestens Teile des Luftführungssystems des Oberstocks 2 sind Bestandteil des Luftführungssystems des Unterstocks 1.

Im Bereich des Bodens 5 des Unterstocks 1 sind Fortluftansaugöffnungen 6 für die Fortluft, d. h. für die abzuführende mit Verbrennungsgasen angereicherte Luft aus dem Unterstock 1 angeordnet.

Im Bereich des Bodens 7 des Oberstocks 2 sind Fortluftansaugöffnungen 8 für die Fortluft aus dem Oberstock 2 und Einluftansaugöffnungen 9 für die Einluft angeordnet. Die Einluftansaugöffnungen 9 stehen über den Oberstock 2 und beiderseits zur Mittellängsebene des Transportwagens im Anpassungsbereich 4a des Dachabschnitts 4 angeordnete, verschließbare Frischluftansaugöffnungen 10 mit der Außenluft (Frischluft) in Verbindung, womit gleichzeitig das Luftführungssystem am oberen Ende mit der Außenluft in Verbindung steht. Am anderen Ende ist das Luftführungssystem mit mindestens einem Luftdurchsatzgerät 11 verbunden, das die Frischluft im unteren Bereich des Transportwagens über einen Fortluftaustritt 22 nach außen abführt. Bei diesem Ausführungsbeispiel wird das Luftdurchsatzgerät 11 im Saugbetrieb betrieben.

Die Lüftungseinrichtung weist eine Umstelleinrichtung 12 auf, mittels der die Luftführung wechselweise für den Unterstock 1 und den Oberstock 2 schalt- und betreibbar ist.

Das Luftführungssystem weist weiter ein dem Oberstock 2 zugeordnetes, separates, erstes Luftkanalsystem 13 und ein dem Unterstock 1 zugeordnetes, separates, zweites Luftkanalsystem 14 auf. Die Luftkanalsysteme 13 und 14 münden in örtlicher Nähe zueinander in einem Sammelraum 15 des Luftdurchsatzgerätes 11. Die Umstelleinrichtung 12 ist im Bereich des Eintritts der beiden Luftkanalsysteme 13, 14 in den Sammelraum 15 angeordnet. Die Umstelleinrichtung 12 ist zweckmäßig als Klappensystem ausgebildet, welches Umstellklappen 12a aufweist, die durch wechselseitiges Verschwenken jeweils eines der beiden Luftkanalsysteme 13 oder 14 sperrt und das jeweils andere Luftkanalsystem 14 oder 13 öffnet.

Das Luftkanalsystem 13 für den Oberstock 2 weist im Unterstock 1 des Transportwagens an beiden Seiten einen sich in Längsrichtung erstreckenden Längskanal 16 auf, der über einen Anschlußkanal 16a mit dem Sammelraum 15 des Luftdurchsatzgerätes 11 in Verbindung steht und an den Stichkanäle 17 angeschlossen sind, die in den Fortluftansaugöffnungen 8 des Oberstocks 2 enden.

Das Luftkanalsystem 14 für den Unterstock 1 weist einen sich in Längsrichtung im Bereich des Bodens 5 im Unterstock 1 erstreckenden Bodenlängskanal 18 auf, der einerseits über einen Anschlußkanal 18a mit dem Sammelraum 15 des Luftdurchsatzgerätes 11 verbunden ist und der andererseits die Fortluftansaugöffnungen 6 des Unterstocks 1 aufweist. Der Unterstock 1 und der Oberstock 2 sind über die Einluftansaugkanäle 9 miteinander verbunden. Die Einluftansaugkanäle 9 münden in den Oberstock 2, dessen Laderaum über die Frischluftansaugöffnungen 10, die im Anpassungsbereich 4a des Dachabschnitts 4 angeordnet sind, mit der Außenluft (Frischluft) in Verbindung steht. Die Frischluftansaugöffnungen 10 sind verschließbar ausgebildet.

In einem zweiten Ausführungsbeispiel der Erfindung weist das Luftführungssystem ein für den Oberstock 2 und den Unterstock 1 gemeinsames Luftkanalsystem 13a zur Fortluftabsaugung auf, das im Bereich der Seitenwände 20 des Transportwagens angeordnet ist und das die in den Oberstock 2 mündenden Fortluftansaugöffnungen 8 und die in den Unterstock 1 mündenden Fortluftansaugöffnungen 6 aufweist.

Die Umstelleinrichtung 12 ist in diesem zweiten Ausführungsbeispiel im Bereich der Fortluftansaugöffnungen 6 des Unterstocks 1 angeordnet.

Im ausgeführten zweiten Ausführungsbeispiel weist die Umstelleinrichtung 12 Schwenkklappen 21 auf, wobei jeder Fortluftansaugöffnung 8 des Unterstocks 1 eine Schwenkklappe 21 zugeordnet ist.

Die Schwenkklappe 21 ist derart ausgebildet, daß sie befähigt ist, die Fortluftansaugöffnung 6 des Unterstocks 1 zu verschließen, wobei gleichzeitig der Luftdurchtritt durch das Luftkanalsystem 13a zur Fortluftansaugöffnung 8 des Oberstocks 2 geöffnet wird, oder die Fortluftansaugöffnung 6 des Unterstocks 1 zu öffnen, wobei gleichzeitig der Luftdurchtritt durch das Luftkanalsystem 13a zur Fortluftansaugöffnung 8 des Oberstocks 2 geschlossen wird.

Die verschließbaren und auch öffnungsfähigen Frischluftansaugöffnungen 10 erstrecken sich bei beiden Ausführungsbeispielen in Querrichtung mindestens über den Bereich des Anpassungsbereichs 4a des Dachabschnittes 4, womit bei geöffneter Frischluftansaugöffnung 10 die lichte Höhe im Seitenbereich, der als Zugang zum Be- und Entsteigen der Landfahrzeuge vorgesehen ist, vergrößert ist. Die Frischluftansaugöffnungen 10 erstrecken sich in Längsrichtung über mindestens erhebliche Teile der Wagenlänge des Transportwagens.

Es ist angestrebt, die Frischluftansaugöffnungen 10 zu beiden Seiten des Transportwagens möglichst über die gesamte Längsrichtung öffnungsfähig auszubilden.

Dazu sind am Transportwagen über dem Zugangsweg eine oder mehrere Klappen 19 angelenkt, die aus der im Fahrzeugprofil liegenden Schließlage durch Verschwenken nach außen in eine öffnungslage verbringbar sind. In den Ausführungsbeispielen ist jede Klappe 19 nach oben schwenkbar im oberen Teil des Dachabschnittes 4 angelenkt und überdeckt in verschwenkter Lage von oben den Zugangsweg im Seitenbereich des Transportwagens und bildet somit einen Wetterschutz für die Insassen der Kraftfahrzeuge.

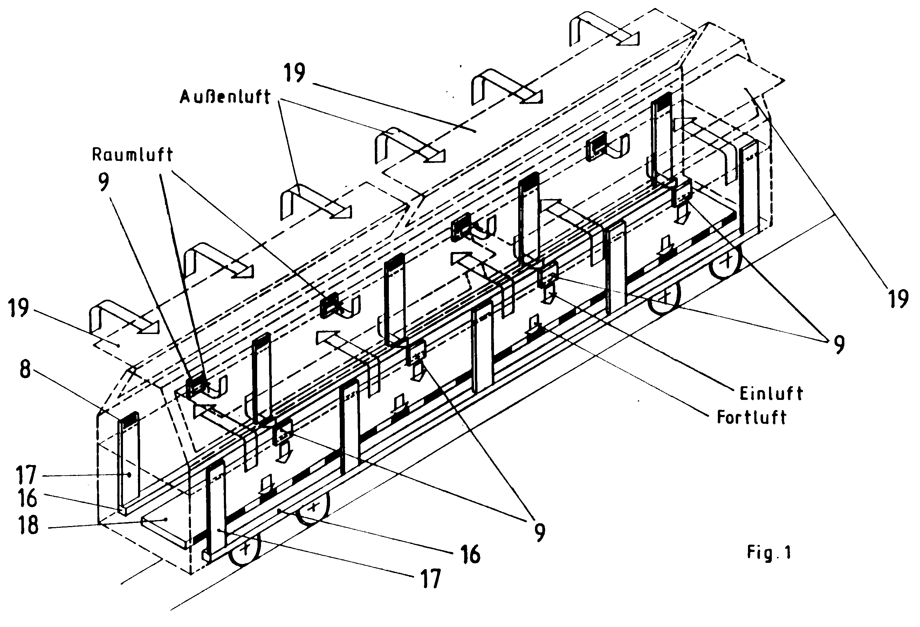

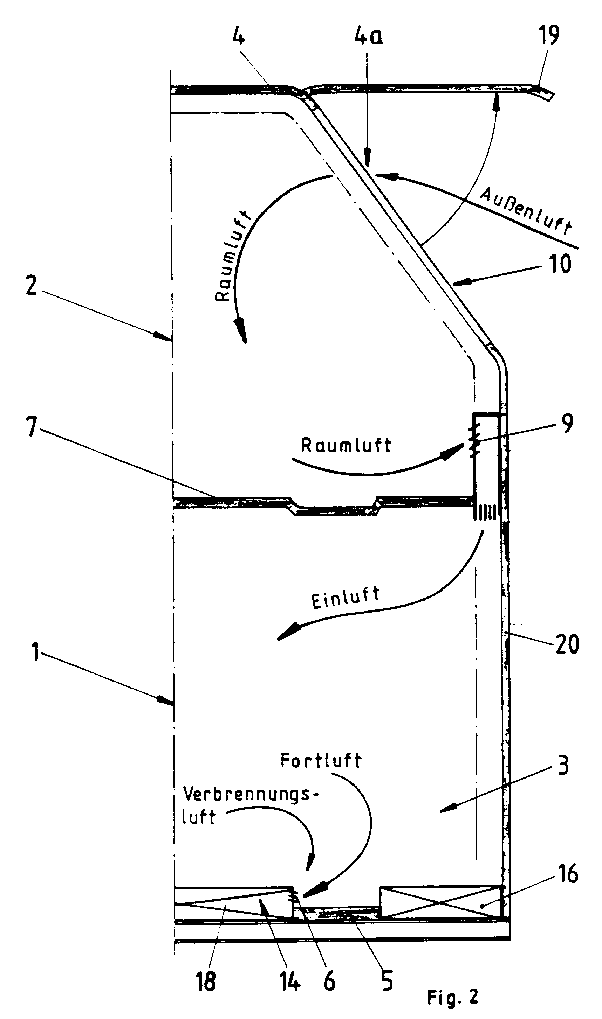

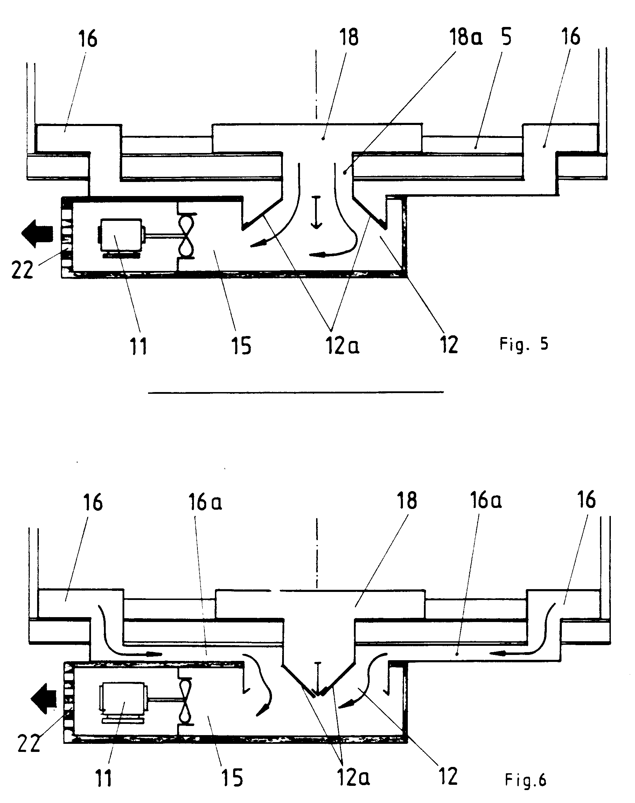

Die Belüftung des Unterstocks 1 des Transportwagens ist in den Figuren 1, 2 und 5 schematisch dargestellt. Die Luftführung ist zum besseren Verständnis durch Pfeile dargestellt. Die Umstelleinrichtung 12 befindet sich für diesen Betriebsfall in der in Fig. 5 dargestellten Lage.

Die Klappen 12a der Umstelleinrichtung verschließen die öffnungen der Anschlußkanäle 16a zum Sammelraum 15 und öffnen die öffnung(en) des Anschlußkanals 18a zum Sammelraum 15, wodurch einerseits Fortluft aus dem Bodenlängskanal 18 des Unterstocks 1 angesaugt werden kann und andererseits ein Luftdurchsatz aus den Längskanälen 16 gesperrt ist.

Die Frischluftzufuhr (Außenluft) erfolgt über die durch Aufschwenken der Schwenkklappen 21 geöffneten Frischluftansaugöffnungen 10 in den Oberstock 2. Die Frischluft wird nunmehr als Raumluft des Oberstocks 2 über die an der Seitenwand 20 angeordneten Einluftansaugöffnungen 9 dem Oberstock 2 entnommen und dem Unterstock 1 als Einluft (Frischluft) zugeführt. Im Unterstock 1 ist durch den Betrieb von Verbrennungskraftmaschinen mit Schadstoffen belastete Raumluft erzeugt worden bzw. wird erzeugt. Die Einluft vermischt sich mit Verbrennungsluft und wird als Fortluft über den Bodenlängskanal 18 und den Anschlußkanal 18a mittels des Luftdurchsatzgerätes 11 (Saugbetrieb) in den Sammelraum 15 angesaugt und über den Fortluftaustritt 22 im Untergestellbereich nach außen gegeben.

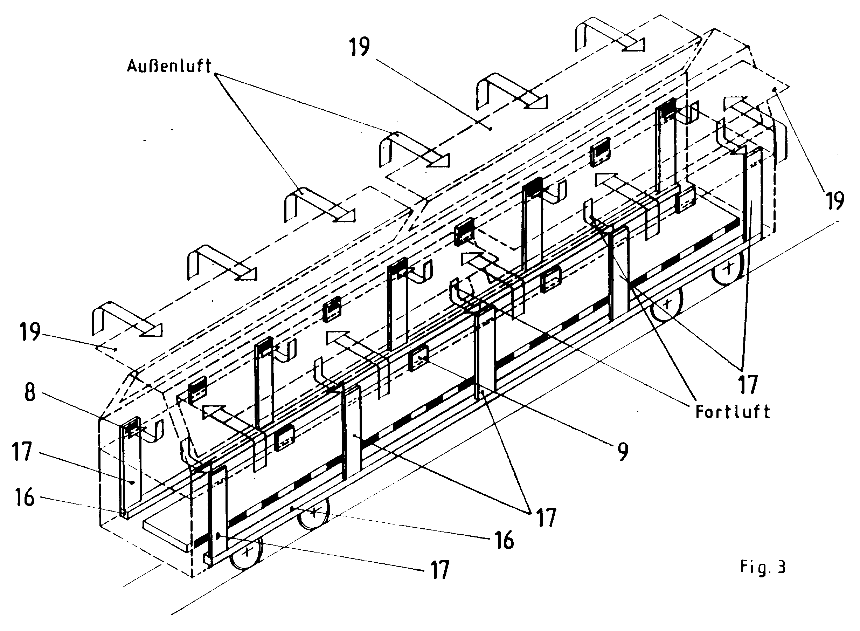

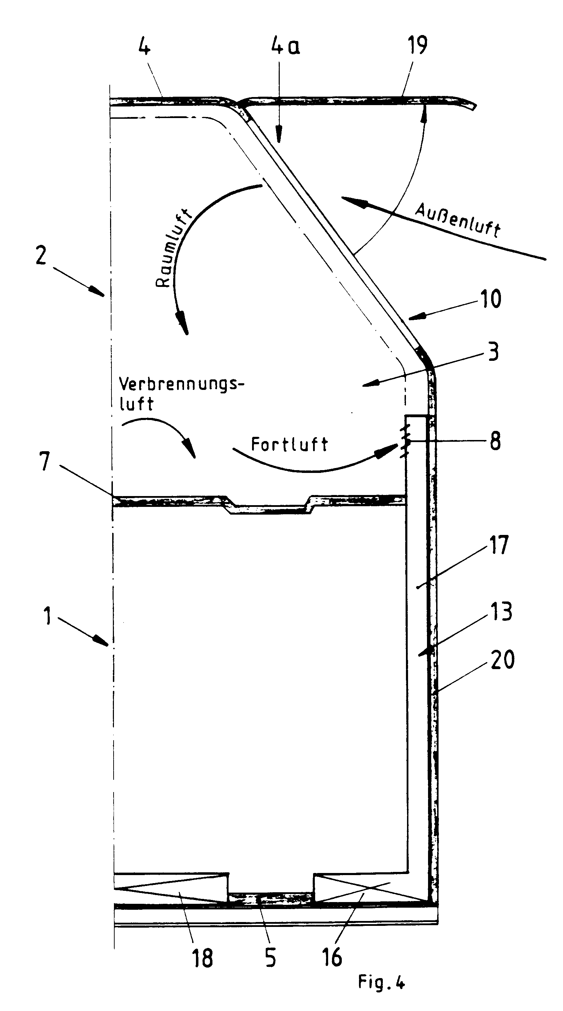

Die Belüftung des Oberstocks 2 des Transportwagens ist in den Figuren 3, 4 und 6 schematisch dargestellt. Die Luftführung ist zum besseren Verständnis durch Pfeile dargestellt. Die Umstelleinrichtung 12 befindet sich für diesen Betriebsfall in der in Fig. 6 dargestellten Lage.

Die Klappen 12a der Umstelleinrichtung 12 verschließen die Öffnungen der Anschlußkanäle 18a zum Sammelraum 15 und halten die öffnungen der Anschlußkanäle 16a geöffnet, wodurch einerseits Fortluft aus den seitlich angeordneten Längskanälen 16 zum Oberstock 2 angesaugt werden kann, andererseits aber ein Luftdurchsatz aus dem Bodenlängskanal 18 gesperrt ist.

Die Frischluftzufuhr (Außenluft) erfolgt über die durch Aufschwenken der Schwenkklappen 21 geöffneten Frischluftansaugöffnungen 10 in den Oberstock 2. Im Oberstock 2 ist durch den Betrieb von Verbrennungskraftmaschinen mit Schadstoffen belastete Raumluft erzeugt worden bzw. wird erzeugt. Die Frischluft wird nunmehr als Raumluft des Oberstocks 2 mit der Verbrennungsluft vermischt und durch das Luftdurchsatzgerät 11 als Fortluft über die Fortluftansaugöffnungen 8 in die Stichkanäle 17, die Längskanäle 16 und die Anschlußkanäle 16a in den Sammelraum 15 abgesaugt und hinter dem Luftdurchsatzgerät 11 über den Fortluftaustritt 22 im Untergestellbereich nach außen abgegeben.

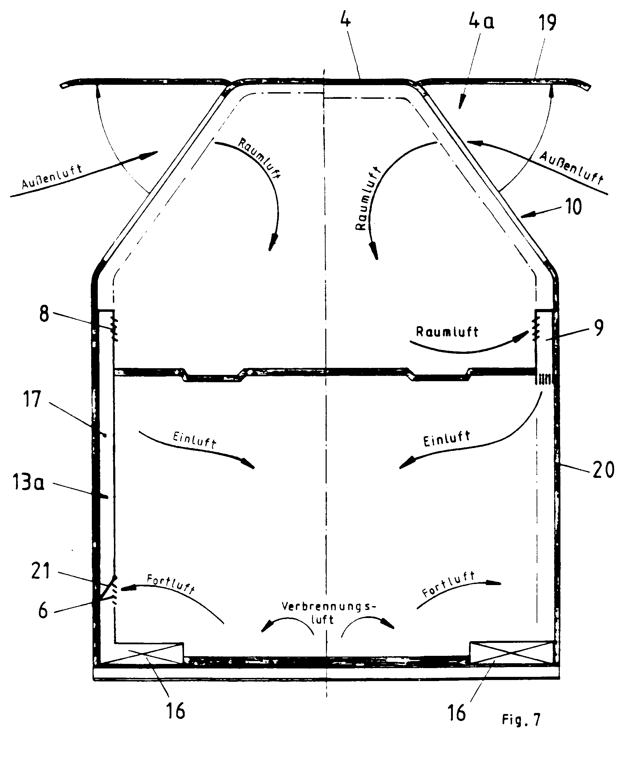

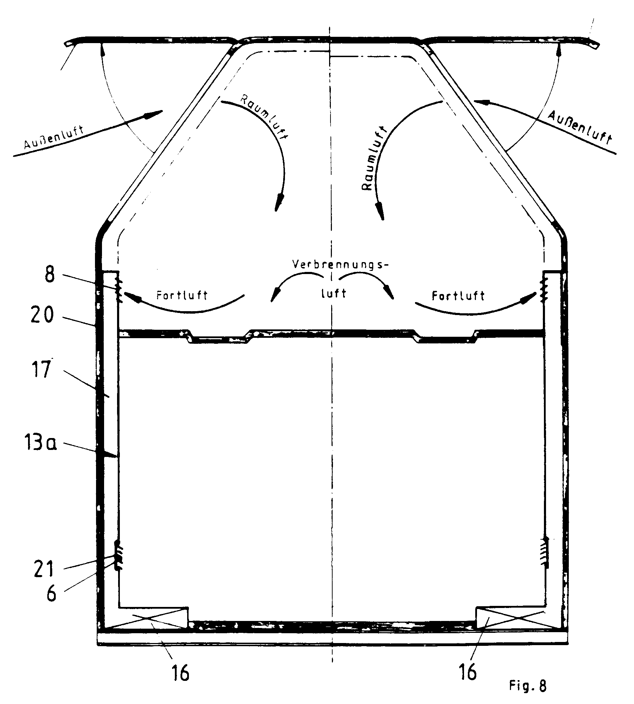

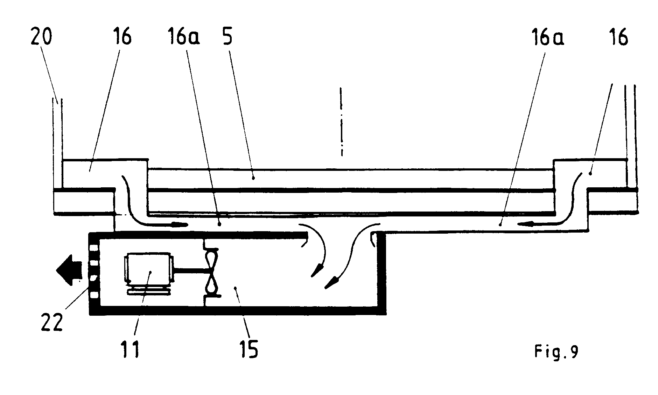

Für das zweite Ausführungsbeispiel ist in den Figuren 7 bis 9 die jeweilige Luftführung zur Belüftung des Unterstocks 1 oder des Oberstocks 2 dargestellt.

Zur Belüftung des Unterstocks 1 ist jede Fortluftansaugöffnung 6 des Unterstocks 1 geöffnet und die Schwenkklappe 21 der Umstelleinrichtung 12 sperrt den Luftdurchtritt zum oberen Teil des Stichkanals 17 und damit zur Fortluftansaugöffnung 8 zum Oberstock 2. Die Luftführung im zweiten Ausführungsbeispiel ist bis zur Fortluftansaugöffnung 6 entsprechend der des ersten Ausführungsbeispiels. Nach Durchtritt durch die Fortluftansaugöffnung 6 wird die Fortluft des Unterstocks 1 mittels des Luftdurchsatzgerätes 11 über die Längskanäle 16 und die Anschlußkanäle 16a in den Sammelraum 15 abgesaugt und hinter dem Luftdurchsatzgerät 11 über den Fortluftaustritt 22 nach außen abgegeben.

Zur Belüftung des Oberstocks 2 ist jede Fortluftansaugöffnung 6 des Unterstocks 1 durch die Schwenkklappe 21 der Umstelleinrichtung 12 geschlossen und der Luftdurchtritt zum oberen Teil des Stichkanals 17 und damit zur Fortluftansaugöffnung 8 des Oberstocks 2 freigegeben. Die Fortluft des Oberstocks 2 wird nunmehr wie im ersten Betriebsfall nach außen abgegeben.

Die Fortluftansaugöffnungen 6 und 8 und die Einluftansaugöffnungen 9 sind derart ausgebildet und angeordnet, daß Wasser, z. B. Regenwasser oder Wasser aus tauendem Eis und Schnee, nicht angesaugt wird bzw. anderweitig in die Luftkanalsysteme 13a gelangt.

Ein kontinuierlicher Betrieb der Lüftungseinrichtung ist beim Be- und Entladen des Transportwagens geboten. Bei Stillstandszeiten ohne Kraftfahrzeugverkehr oder Transportfahrten im Zugverband kann die Lüftungseinrichtung im Intervallbetrieb betrieben werden.

Für größere Transportwagen oder falls die Anordnung eines großen Luftdurchsatzgerätes 11 im Untergestellbereich Platzprobleme schafft, ist ein Betrieb mit mehreren Luftdurchsatzgeräten 11 und/oder die Anordnung von unabhängigen, erfindungsgemäßen Lüftungseinrichtungen, die für Abschnitte in Längsrichtung des Transportwagens vorgesehen sind.

### Bezugszeichen

- 1: Unterstock
- 2: Oberstock
- 3: Lüftungseinrichtung
- 4: Dachabschnitt
- 4a: Anpassungsbereich
- 5: Boden
- 6: Fortluftansaugöffnung
- 7: Boden
- 8: Fortluftansaugöffnung
- 9: Einluftansaugöffnung
- 10: Frischluftansaugöffnung
- 11: Luftdurchsatzgerät
- 12: Umstelleinrichtung
- 12a: Umstellklappe
- 13: Luftkanalsystem
- 13a: Luftkanalsystem
- 14: Luftkanalsystem
- 15: Sammelraum
- 16: Längskanal
- 16a: Anschlußkanal
- 17: Stichkanal
- 18: Bodenlängskanal
- 18a: Anschlußkanal
- 19: Klappen
- 19a: Anpassungsbereich
- 20: Seitenwand
- 21: Schwenkklappe
- 22: Fortluftaustritt

## Patentansprüche

1. Schienengebundener, geschlossener, doppelstöckiger Transportwagen mit Unterstock und Oberstock zum Transport von Landfahrzeugen, insbesondere von Kraftfahrzeugen mit Verbrennungsmotor, wobei im Anpassungsbereich des Dachabschnitts zur besseren Ausnutzung für das Durchfahrprofil die lichte Höhe des Oberstocks im Querschnitt vom höchsten Mittelbereich zu den Seitenwänden des Transportwagens hin abnehmend ausgebildet ist, **dadurch gekennzeichnet**, daß der Transportwagen mit einer Lüftungseinrichtung (3) versehen ist, die ein Luftführungssystem aufweist, das sowohl mit dem Unterstock (1) als auch mit dem Oberstock (2) in Verbindung steht, wobei mindestens Teile des Luftführungssystems des Oberstocks (2) Bestandteil des Luftführungssystems des Unterstocks (1) sind und im Bereich des Bodens (5) des Unterstocks (1) Fortluftansaugöffnungen (6) für die Fortluft des Unterstocks (1) aufweist und im Bereich des Bodens (7) des Oberstocks (2) Fortluftansaugöffnungen (8) für die Fortluft des Oberstocks (2) und Einluftansaugöffnungen (9) für die Einluft zum Unterstock (1) aufweist, daß im oberen Bereich des Oberstocks (2) mindestens eine Frischluftansaugöffnung (10) angeordnet ist, über die das Luftführungssystem an einem Ende mit der Außenluft (Frischluft) in Verbindung steht und daß das Luftführungssystem am anderen Ende mit mindestens einem Luftdurchsatzgerät (11) im Saugbetrieb verbunden ist, das die Fortluft im unteren Bereich des Transportwagens nach außen abführt.

2. Schienengebundener, geschlossener, doppelstöckiger Transportwagen nach Anspruch 1, **dadurch gekennzeichnet**, daß die Lüftungseinrichtung (3) mittels einer Umstelleinrichtung (12) für Oberstock (2) und Unterstock (1) wechselweise schalt- und betreibbar ausgebildet ist.

3. Schienengebundener, geschlossener, doppelstöckiger Transportwagen nach Anspruch 1 oder 2, **dadurch gekennzeichnet**, daß das Luftführungssystem ein dem Unterstock (1) zugeordnetes, erstes Luftkanalsystem (13) und ein dem Oberstock (2) zugeordnetes, zweites Luftkanalsystem (14) aufweist.

4. Schienengebundener, geschlossener, doppelstöckiger Transportwagen nach Anspruch 3, **dadurch gekennzeichnet**, daß die beiden Luftkanalsysteme (13, 14) in einem Sammelraum (15) des Luftdurchsatzgerätes (11) in örtlicher Nähe zueinander münden und die Umstelleinrichtung (12) im Bereich des Eintritts der beiden Luftkanalsysteme (13, 14) in dem Vorraum angeordnet sind.

5. Schienengebundener, geschlossener, doppelstöckiger Transportwagen nach Anspruch 2 oder Anspruch 4, **dadurch gekennzeichnet**, daß die Umstelleinrichtung (12) als Klappensystem ausgebildet ist, welches durch wechselseitiges Verschwenken einer Umstellklappe (12a) des Klappensystems befähigt ist, jeweils eines der beiden Luftkanalsysteme (13, 14) und damit den Luftdurchsatz zu sperren und das andere Luftkanalsystem (14, 13) zu öffnen und damit den Luftdurchsatz zu ermöglichen.

6. Schienengebundener, geschlossener, doppelstöckiger Transportwagen nach Anspruch 3, **dadurch gekennzeichnet**, daß das Luftkanalsystem (13) für den Oberstock (2) jeweils zu beiden Seiten im Unterstock (1) des Transportwagens sich in Längsrichtung erstreckende Längskanäle (16) aufweist, die einerseits mit dem Sammelraum (15) des Luftdurchsatzgerät (11) in Verbindung stehen und die andererseits an zum Oberstock (2) führende Stichkanäle (17) angeschlossen sind, die in den Fortluftansaugöffnungen (8) enden.

7. Schienengebundener, geschlossener, doppelstöckiger Transportwagen nach Anspruch 6, **dadurch gekennzeichnet**, daß das Längskanäle (16) im Bodenbereich (5) des Unterstocks (1) angeordnet sind.

8. Schienengebundener, geschlossener, doppelstöckiger Transportwagen nach einem oder mehreren der vorhergehenden Ansprüche 1 bis 7, **dadurch gekennzeichnet**, daß das Luftkanalsystem (14) für den Unterstock (1) einen sich in Längsrichtung im Bodenbereich (5) im Unterstock (1) des Transportwagens erstreckenden Bodenlängskanal (18) aufweist, der einerseits mit dem Sammelraum (15) des Luftdurchsatzgerätes (11) in Verbindung steht und der andererseits mit den Fortluftansaugöffnungen (6) des Unterstocks (1) versehen ist und daß der Unterstock (1) und der Oberstock (2) über die Einluftansaugöffnungen (9) miteinander verbunden sind, wobei die Einluftansaugöffnungen (9) in den Oberstock (2) münden, der über die Frischluftansaugöffnung (10) im Anpassungsbereich des Oberstocks (2) mit der Außenluft (Frischluft) in Verbindung bringbar ist.

9. Schienengebundener, geschlossener, doppelstöckiger Transportwagen nach Anspruch 1 oder 2, **dadurch gekennzeichnet**, daß das Luftführungssystem ein für den Oberstock (2) und den Unterstock (1) gemeinsames Luftkanalsystem (13a) zur Fortluftabsaugung aufweist, das im Bereich der Seitenwände (20) des Transportwagens angeordnet ist und das die in den Oberstock (2) mündende Fortluftansaugöffnungen (8) und in den Unterstock (1) mündende Fortluftansaugöffnungen (6) aufweist.

10. Schienengebundener, geschlossener, doppelstöckiger Transportwagen nach Anspruch 2 oder 9, **dadurch gekennzeichnet**, daß die Umstelleinrichtung (12) im Bereich der Fortluftansaugöffnungen (6) des Unterstocks (1) angeordnet ist.

11. Schienengebundener, geschlossener, doppelstöckiger Transportwagen nach Anspruch 10, **dadurch gekennzeichnet**, daß die Umstelleinrichtung (12) Schwenkklappen (21) aufweist, wobei jeder Fortluftansaugöffnung (6) des Unterstocks (1) eine Schwenkklappe (21) zugeordnet ist, die befähigt ist, die Fortluftansaugöffnung (8) des Unterstocks (1) zu verschließen, wobei gleichzeitig der Luftdurchtritt durch das Luftkanalsystem (13a) zur Fortluftansaugöffnung (8) des Oberstocks (2) geöffnet wird, oder die Fortluftansaugöffnung (8) des Unterstocks (1) zu öffnen, wobei gleichzeitig der Luftdurchtritt durch das Luftkanalsystem (13a) zur Fortluftansaugöffnung (8) des Oberstocks (2) geschlossen wird.

12. Schienengebundener, geschlossener, doppelstöckiger Transportwagen mindestens nach Anspruch 1, **dadurch gekennzeichnet**, daß jede Frischluftansaugöffnung (10) verschließbar und öffnungsfähig ausgebildet ist und sich in Querrichtung mindestens über den Bereich des Anpassungsbereichs (4a) des Dachabschnitts (4) erstrecken, der als Breite des Zugangsweges zum Be- und Entsteigen der Landfahrzeuge vorgesehen ist und sich die Frischluftansaugöffnungen (10) in Längsrichtung über mindestens erhebliche Teile der Wagenlänge des Transportwagens erstrecken.

13. Schienengebundener, geschlossener, doppelstöckiger Transportwagen nach Anspruch 12, **dadurch gekennzeichnet**, daß jede Frischluftansaugöffnung (10) durch eine schwenkbare Klappe (19) öffnungsfähig und verschließbar ausgebildet ist, die am Transportwagen über dem Zugangsweg angeordnet ist und die aus der im Fahrzeugprofil liegenden Schließlage durch Verschwenken nach außen in eine öffnungslage verbringbar ist.

14. Schienengebundener, geschlossener, doppelstöckiger Transportwagen nach Anspruch 13, **dadurch gekennzeichnet**, daß die Klappen (19) nach oben schwenkbar am Dachabschnitt (4) angelenkt sind und im verschwenkten Zustand einen Wetterschutz für die Insassen der Kraftfahrzeuge bilden.

## Claims

1. Rail-bound, closed, double-deck transporter wagon with a lower deck and an upper deck for transporting land vehicles, in particular motor vehicles with an internal combustion engine, in which in the area of adaptation of the roof section for better utilisation for the overhead clearance profile the headroom of the upper deck decreases in the cross-section from the highest middle area to the side walls of the transporter wagon, characterised in that the transporter wagon is provided with a ventilation installation (3) which exhibits an air circulation system which is connected both to the lower deck (1) and to the upper deck (2), at least parts of the air circulation system of the upper deck (2) being part of the air circulation system of the lower deck (1), and in the area of the floor (5) of the lower deck (1) exhibits exhaust air intake openings (6) for the exhaust air of the lower deck (1) and in the area of the floor (7) of the upper deck (2) exhibits exhaust air intake openings (8) for the exhaust air of the upper deck (2) and inlet air intake openings (9) for the inlet air to the lower deck (1), in that in the upper area of the upper deck (2) there is at least one fresh air intake opening (10) through which the air circulation system is connected at one end to the exterior air (fresh air), and in that the air circulation system is connected at the other end to at least one air circulating device (11) working by suction which discharges the exhaust air in the lower area of the transporter wagon to the exterior.

2. Rail-bound, closed, double-deck transporter wagon according to claim 1, characterised in that the ventilation installation (3) is embodied so that it can be switched and operated alternately for the upper deck (2) and the lower deck (1) by means of a switching device (12).

3. Rail-bound, closed, double-deck transporter wagon according to claim 1 or 2, characterised in that the air circulation system exhibits a first air duct system (13) associated with the lower deck (1) and a second air duct system (14) associated with the upper deck (2).

4. Rail-bound, closed, double-deck transporter wagon according to claim 3, characterised in that the two air duct systems (13, 14) debouch physically close to one another in a collecting chamber (15) of the air circulating device (11) and the switching device (12) is disposed in the area of the inlet of the two air duct systems (13, 14) in the outer-chamber.

5. Rail-bound, closed, double-deck transporter wagon according to claim 2 or claim 4, characterised in that the switching device (12) is embodied as a flap system which is capable of blocking one of the two air duct systems (13, 14) and hence the circulation of air and opening the other air duct system (14, 13) and thus allowing the circulation of air by alternate pivoting of a switching flap (12a) of the flap system.

6. Rail-bound, closed, double-deck transporter wagon according to claim 3, characterised in that the air duct system (13) for the upper deck (2) exhibits longitudinal ducts (16) which extend in the longitudinal direction on both sides in the lower deck (1) of the transporter wagon and firstly are connected with the collecting chamber (15) of the air circulating device (11) and secondly are connected to branch ducts (17) which lead to the upper deck (2) and terminate in the exhaust air intake openings (8).

7. Rail-bound, closed, double-deck transporter wagon according to claim 6, characterised in that the longitudinal ducts (16) are disposed in the floor area (5) of the lower deck (1).

8. Rail-bound, closed, double-deck transporter wagon according to one or more of the preceding claims 1 to 7, characterised in that the air duct system (14) for the lower deck (1) exhibits a longitudinal floor duct (18) which extends in the longitudinal direction in the floor area (5) in the lower deck (1) of the transporter wagon and firstly is connected with the collecting chamber (15) of the air circulating device (11) and secondly is provided with the exhaust air intake openings (6) of the lower deck (1), and in that the lower deck (1) and the upper deck (2) are connected to one another by means of the inlet air intake openings (9), the inlet air intake openings (9) debouching in the upper deck (2) which can be connected via the fresh air intake opening (10) in the area of adaptation of the upper deck (2) to the exterior air (fresh air).

9. Rail-bound, closed, double-deck transporter wagon according to claim 1 or 2, characterised in that the air circulation system exhibits an air duct system (13a) for extraction of exhaust air which is common to the upper deck (2) and the lower deck (1) and is disposed in the area of the side walls (20) of the transporter wagon and exhibits the exhaust air intake openings (8) debouching in the upper deck (2) and exhaust air intake openings (6) debouching in the lower deck (1).

10. Rail-bound, closed, double-deck transporter wagon according to claim 2 or 9, characterised in that the switching device (12) is disposed in the area of the exhaust air intake openings (6) of the lower deck (1).

11. Rail-bound, closed, double-deck transporter wagon according to claim 10, characterised in that the switching device (12) exhibits pivoting flaps (21), each exhaust air intake opening (6) of the lower deck (1) being associated with a pivoting flap (21) which is capable of closing the exhaust air intake opening (8) of the lower deck (1) while simultaneously opening the air passage through the air duct system (13a) to the exhaust air intake opening (8) of the upper deck (2), or of opening the exhaust air intake opening (8) of the lower deck (1) while simultaneously closing the air passage through the air duct system (13a) to the exhaust air intake opening (8) of the upper deck (2).

12. Rail-bound, closed, double-deck transporter wagon at least according to claim 1, characterized in that each fresh air intake opening (10) is embodied so that it can be closed and opened, and in the transverse direction extends at least over the area of the area of adaptation (4a) of the roof section (4) which is provided as the breadth of the access passage for entering and leaving the land vehicles, and in that the fresh air intake openings (10) extend in the longitudinal direction over at least substantial parts of the length of the transporter wagon.

13. Rail-bound, closed, double-deck transporter wagon according to claim 12, characterised in that each fresh air intake opening (10) is embodied so that it can be opened and closed by a pivoting flap (19) which is disposed on the transporter wagon above the access passage and can be pivoted outwards into an opening position from the closing position in the vehicle profile.

14. Rail-bound, closed, double-deck transporter wagon according to claim 13, characterised in that the flaps (19) are articulated so that they can be pivoted upwards on the roof section (4) and when pivoted form a weather shield for the occupants of the motor vehicles.

## Revendications

1. Véhicule de transport fermé à deux étages sur rails comprenant un étage inférieur et un étage supérieur, pour le transport de véhicules routiers, en particulier de véhicules automobiles à moteur à combustion interne, étant précisé que dans la zone d'adaptation de la section de toit, pour une meilleure exploitation pour le profil de passage, la hauteur libre de l'étage supérieur va en diminuant, en section transversale, de la zone centrale la plus haute vers les parois latérales du véhicule de transport, caractérisé en ce que le véhicule de transport est pourvu d'un système d'aération (3) comprenant un système de circulation d'air qui communique aussi bien avec l'étage inférieur (1) qu'avec l'étage supérieur (2), étant précisé que des parties au moins du système de circulation d'air de l'étage supérieur (2) font partie du système de circulation d'air de l'étage inférieur (1), qu'il est prévu, dans la zone du plancher (5) de l'étage inférieur (1), des ouvertures d'aspiration d'air d'échappement (6) pour l'air d'échappement de l'étage inférieur (1) et, dans la zone du plancher (7) de l'étage supérieur (2), des ouvertures d'aspiration d'air d'échappement (8) pour l'air d'échappement de l'étage supérieur (2), ainsi que des ouvertures d'aspiration d'air entrant (9) pour l'air entrant vers l'étage inférieur (1), en ce qu'il est prévu, dans la zone supérieure de l'étage supérieur (2), au moins une ouverture d'aspiration d'air frais (10) par l'intermédiaire de laquelle le système de circulation d'air communique, à une extrémité, avec l'air extérieur (air frais), et en ce que le système de circulation d'air est relié, à l'autre extrémité, à au moins un appareil de transfert d'air (11) en mode d'aspiration qui évacue vers l'extérieur l'air d'échappement contenu dans la zone inférieure du véhicule de transport.

2. Véhicule de transport fermé à deux étages sur rails selon la revendication 1, caractérisé en ce que le dispositif d'aération (3) est conçu pour pouvoir être commuté et actionné alternativement pour l'étage supérieur (2) et pour l'étage inférieur (1) à l'aide d'un dispositif inverseur (12).

3. Véhicule de transport fermé à deux étages sur rails selon la revendication 1 ou 2, caractérisé en ce que le système de circulation d'air comporte un premier système de canalisation d'air (13) associé à l'étage supérieur (2), et un second système de canalisation d'air (14) associé à l'étage inférieur (1).

4. Véhicule de transport fermé à deux étages sur rails selon la revendication 3, caractérisé en ce que les deux systèmes de canalisation d'air (13, 14) débouchent à proximité l'un de l'autre dans un espace collecteur (15) de l'appareil de transfert d'air (11), et le dispositif inverseur (12) est disposé dans la zone de l'entrée des deux systèmes de canalisation d'air (13, 14) dans ledit espace.

5. Véhicule de transport fermé à deux étages sur rails selon la revendication 2 ou 4, caractérisé en ce que le dispositif inverseur (12) est conçu comme un système de clapets qui est apte, grâce au pivotement alternatif d'un clapet inverseur (12a) dudit système de clapets, à bloquer l'un des deux systèmes de canalisation d'air (13, 14) et, ainsi, le transfert d'air, et à ouvrir l'autre système de canalisation d'air (14, 13) et à permettre ainsi le transfert d'air.

6. Véhicule de transport fermé à deux étages sur rails selon la revendication 3, caractérisé en ce que le système de canalisation d'air (13) prévu pour l'étage supérieur (2) comporte, des deux côtés de l'étage inférieur (1) du véhicule de transport, des conduits longitudinaux (16) s'étendant dans le sens longitudinal qui communiquent d'une part avec l'espace collecteur (15) de l'appareil de transfert d'air (11) et qui sont raccordés d'autre part à des conduits de dérivation (17) menant à l'étage supérieur (2), qui débouchent dans les ouvertures d'aspiration d'air d'échappement (8).

7. Véhicule de transport fermé à deux étages sur rails selon la revendication 6, caractérisé en ce que les conduits longitudinaux (16) sont disposés dans la zone du plancher (5) de l'étage inférieur (1).

8. Véhicule de transport fermé à deux étages sur rails selon l'une au moins des revendications précédentes 1 à 7, caractérisé en ce que le système de canalisation d'air (14) prévu pour l'étage inférieur (1) comporte un conduit longitudinal de plancher (18) qui s'étend dans le sens longitudinal, dans la zone du plancher (5) de l'étage inférieur (1) du véhicule de transport, et qui communique d'une part avec l'espace collecteur (15) de l'appareil de transfert d'air (11) et est pourvu d'autre part des ouvertures d'aspiration d'air d'échappement (6) de l'étage inférieur (1), et en ce que l'étage inférieur (1) et l'étage supérieur (2) sont reliés par l'intermédiaire des ouvertures d'aspiration d'air entrant (9), lesquelles débouchent dans l'étage supérieur (2), qui peut être relié à l'air extérieur (air frais) par l'intermédiaire de l'ouverture d'aspiration d'air frais (10) prévue dans la zone d'adaptation de l'étage supérieur (2).

9. Véhicule de transport fermé à deux étages sur rails selon la revendication 1 ou 2, caractérisé en ce que le système de circulation d'air comporte un système de canalisation d'air (13a) commun pour l'étage supérieur (2) et l'étage inférieur (1), pour l'aspiration de l'air d'échappement, qui est disposé dans la zone des parois latérales (20) du véhicule de transport et qui comporte des ouvertures d'aspiration d'air d'échappement (8) débouchant dans l'étage supérieur (2) et des ouvertures d'aspiration d'air d'échappement (6) débouchant dans l'étage inférieur (1).

10. Véhicule de transport fermé à deux étages sur rails selon la revendication 2 ou 9, caractérisé en ce que le dispositif inverseur (12) est disposé dans la zone des ouvertures d'aspiration d'air d'échappement (6) de l'étage inférieur (1).

11. Véhicule de transport fermé à deux étages sur rails selon la revendication 10, caractérisé en ce que le dispositif inverseur (12) comporte des clapets pivotants (21), étant précisé qu'il est prévu, associé à chaque ouverture d'aspiration d'air d'échappement (6) de l'étage inférieur (1), un clapet pivotant (21) qui est apte à obturer l'ouverture d'aspiration d'air d'échappement (6) de l'étage inférieur (1), auquel cas le passage d'air par le système de canalisation d'air (13a) vers l'ouverture d'aspiration d'air d'échappement (8) de l'étage supérieur (2) est en même temps ouvert, ou à ouvrir ladite ouverture (6) de l'étage inférieur (1), auquel cas le passage d'air par le système de canalisation d'air (13a) vers l'ouverture (8) de l'étage supérieur (2) est en même temps fermé.

12. Véhicule de transport fermé à deux étages sur rails selon au moins la revendication 1, caractérisé en ce que chaque ouverture d'aspiration d'air frais (10) est conçue pour pouvoir être fermée et ouverte et s'étend dans le sens transversal au moins sur la zone d'adaptation (4a) de la section de toit (4) qui est prévue sur la largeur de la voie d'accès pour monter dans les véhicules routiers et en descendre, et les ouvertures d'aspiration d'air frais (10) s'étendent dans le sens longitudinal au moins sur des parties importantes de la longueur du véhicule de transport.

13. Véhicule de transport fermé à deux étages sur rails selon au moins la revendication 12, caractérisé en ce que chaque ouverture d'aspiration d'air frais (10) est conçue pour pouvoir être ouverte et fermée à l'aide d'un clapet pivotant (19) qui est disposé sur le véhicule de transport sur la voie d'accès et qui peut être amené de la position fermée, située dans le profil du véhicule, à une position ouverte grâce à un pivotement vers l'extérieur.

14. Véhicule de transport fermé à deux étages sur rails selon au moins la revendication 13, caractérisé en ce que les clapets (19) sont articulés à la section de toit (4) pour pouvoir pivoter vers le haut et forment, quand ils ont pivoté, une protection contre les intempéries pour les occupants des véhicules automobiles.
